(19) Europäisches Patentamt
European Patent Office
Office européen des brevets

(11) **EP 1 885 090 B1**

(12) **EUROPEAN PATENT SPECIFICATION**

(45) Date of publication and mention of the grant of the patent:
**13.05.2009 Bulletin 2009/20**

(51) Int Cl.:
***H04L 12/56*** *(2006.01)*

(21) Application number: **06425553.2**

(22) Date of filing: **01.08.2006**

(54) **Time horizon scheduling method for transmitting traffic data bursts with variable length in PMP telecommunications networks**

Schedulingverfahren basierend auf einem Zeithorizont zur Übertragung von Datenbursts mit variabler Länge in PMP Telekommunikationsnetzwerken

Procédé de planification basé sur un horizon de temps pour la transmission de rafales de données à longueur variable dans des réseaux de télécommunication PMP

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**06.02.2008 Bulletin 2008/06**

(73) Proprietor: **Nokia Siemens Networks GmbH & Co. KG**
**81541 München (DE)**

(72) Inventors:
- **Amenta, Giuseppe**
  **20134 Milano (IT)**
- **Pascotti, Angelo**
  **Nave (BS) (IT)**
- **Binda, Lodovico**
  **25887 Olgiate Molgora (LC) (IT)**

(56) References cited:
**EP-A2- 1 324 552**
**US-B1- 6 396 843**
**US-B1- 6 687 228**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 885 090 B1

## Description

### FIELD OF THE INVENTION

The present invention relates to the field of telecommunications networks, and more precisely to a time horizon scheduling method for transmitting traffic data bursts with variable length in PMP telecommunications networks. A list of acronyms is given at the end of the description.

### BACKGROUND ART

Possible candidates for implementing the present invention are all telecommunications systems similar to the ones described in the following standards:

- IEEE 802.16d for fixed stations of Local and Metropolitan area networks (WiMAX) and its amendment IEEE 802.16e for mobile stations.

- ETSI TS 102 000 (Hiperaccess) (DLC) and ETSI TS 101 999 (PHY).

All systems described in these standards contemplate the presence of Base Stations (BS) in communication with a certain number of Subscriber Stations (SS) either fixed or mobile (MS) that will be more generally called Terminal Stations (TS) in the next part of the description. The transmissions from BS to TSs are performed with a broadcast downstream channel, while the transmissions from terminal stations to the BS are performed with an upstream channel. The transmission from many TSs to the BS on a single channel shares the single upstream communication channel among the TSs to avoid, during transmission, interference of each TS with the others.

For sake of simplicity, only WiMAX point-to-multipoint (PMP) radio system is considered hereafter. The WiMAX solution for sharing the physical medium is based on time division for OFDM systems and on time division and frequency division for OFDMA systems. In both cases the single communication channel is divided in bursts and each burst is reserved to the transmission from a single TS activated in that particular burst by assigning a 'grant', described in a control message (UL-MAP) sent by the BS on the downstream channel. The grant message specifies the starting instant of the transmission and the length of the burst, that is the duration of the transmission, as well as the PHY mode, characterized by the combination of modulation and FEC (Forwarding Error Check) and, for OFDMA systems, by the used sub-channels.

The downstream transmission from the BS to the TSs is performed by dividing the radio frame in bursts, described by a special control message (DL-MAP) but each burst may be devoted to send messages to different TSs that can be addressed by the same PHY mode. Both DL-MAP and UL-MAP, as well as other control messages are transmitted in the first downlink burst, whose length is variable, according to the lengths of downlink and uplink maps.

Two duplexing modes are used for dividing the upstream from the downstream channel, namely: time division duplexing (TDD) or frequency division duplexing (FDD). With FDD the upstream transmission is carried out on a frequency band different than the downstream one; while with TDD the frequency band is the same but different time-intervals occur. Moreover, in case of FDD duplexing, the TS may be limited to half-duplex operation (H-FDD) and the BS must avoid commanding the transmission and reception of an H-FFD TS on the same time slots. Therefore, the uplink and downlink transmissions are completely governed by the BS and, both for OFDM and OFDMA systems, are planned by a scheduler located within the BS that assigns the radio bandwidth to TS for fulfilling the Quality of Service (QoS) of the provisioned connections, with respect both to traffic data rate and to traffic priorities. Such is the case also in EP-A-1324552.

The WiMAX standards only indicate the scheduler outputs: the structure of the downstream and upstream frame, the bandwidth request message format, the structure of the downlink map message (DL-MAP) that describes the downlink bursts and of the uplink map (UL-MAP), which informs the Terminal stations about the assigned grant, etc. How the scheduler has to operate in the specific, the adopted policy and its implementation are a matter left open to proprietor's solutions.

The WiMAX Base station scheduler addresses the following main problems:

- Variable length data block transfers.

- Service flow rates with low granularity.

- Transmission not at a predefined period multiple of the radio frame duration.

- Priority among QoS served in flexible way.
- Traffic rate served in flexible way.
- Traffic rate parameter changing on-the-fly.
- Fairness in overbooking condition.
- High number of connections efficiently processed.
- Recovering of scheduling delay.

"Adaptive PHY mode" and transmission of variable length data blocks are central features of the WiMAX point-to-multipoint radio systems. A "PHY mode" consists in the combination of modulation and FEC and is characterized by a different throughput and a different robustness. With the term "adaptive PHY modes" we mean that the transmitting stations, either BS or TS, are commanded to use a PHY mode for the current transmission selected among a set of possible ones.

According to WiMAX standard for OFDM mode, the smallest transmission data block is one OFDM symbols and each symbol can carry a number of data bytes that depends on the PHY mode, from 12 bytes for the most robust BPSK-1/2 mode up to 106 bytes for the most efficient 64QAM-3/4 mode. Symbols are grouped in bursts and the last symbol in the burst can carry one byte less (for instance 11 bytes for BPSK-1/2), due to the tail of FEC coding. A radio frame both in downlink and uplink is composed of various bursts, and its duration can be selected from 2.5 to 20 ms, but the 5 ms value will be considered in next discussion, as it is the most widely used in actual implementations. For the OFDMA mode the smallest transmission data block is one slot that consists in one sub-channel by one or more symbols, depending on the permutation mode, and slots are grouped in data regions. Also in this case, the data bytes carried by one slot are variable and depends on the PHY mode and on the number of data carriers included in a sub-channel: for instance, in downlink PUSC permutation mode, a slot carries from 6 bytes with QPSK-1/2 up to 30 bytes with 64QAM-5/6 PHY modes. A radio frame, whose duration is again 5 ms, is composed of various data regions both in downlink and in uplink.

User data traffic is split in virtual connections, named "service flows" each one with predefined service classes, priorities and traffic rates. Hereafter the term "service flow" and CID will be used for indicating a connection, according to the terminology adopted by WiMAX standards. The service flow rates, either the minimum reserved rate (MRR) that the scheduler shall guarantee to a connection or the maximum sustainable rate (MSR) that shall not be exceeded shall be managed with the lowest granularity as possible, so that it is not necessary to set them to highest values, multiple of the minimum scheduled rate.

Traffic rate fulfilling with transmission at a predetermined period of radio frames cannot be maintained, due to limitation of half-duplex terminal stations and to control messages which have high priority scheduling. The scheduler shall obtain the required traffic rate as an average, but fulfilling the latency time. Priority among the Quality of Service of traffic connections shall be managed in flexible way, so that the implementation can be easily adapted to different policies.

Many MAC protocols with necessity of scheduling algorithms, have been described in the known art, for example in the two European Patent applications of the same Applicant numbered:

- EP 1017244 A1**,** titled: "Method and system to assign transmission bandwidth in both radio and PON (Passive Optical Network) ATM (Asynchronous Transfer Mode) PMP (Point-to-Multipoint) systems".
- EP EP1501326-B1**,** titled: "Medium Access Control method in point-to-multipoint radio systems adopting peripheral stations with adaptive PHY mode".

The first one is a MAC for ATM connection aggregates operating with service data bursts of fixed length, the 48 bytes payload of the ATM cell, and constant PHY mode; while the second one is a MAC able to operate with adaptive PHY mode and burst of variable length (although the non-limiting example also refers to the ATM use). In both cases the point-to-multipoint system is composed of one Master station and many Peripheral stations and the scheduler located in the Master station performs the task of assigning the bandwidth to the peripheral's transmission. According to the cited methods, data traffic is subdivided into connections and the connections characterized by the same class of traffic are aggregated into "connection aggregates" with different priority. A queue is associated to each connection aggregate within each peripheral station to store packets, and bandwidth is assigned in uplink through emission of grants by the Master Station towards the Peripheral Stations in order to:

- Pre-allocate a certain portion of total bandwidth in static modality to various Peripheral Stations having "constant bit rate" (CBR) connections;

- Elaborate instantaneous bandwidth requirement information or "Requests" sent by Peripheral Stations to the Master Station and distribute bandwidth not assigned with previous static technique according to minimum reserved and maximum peak rate of the active connections and to the available dynamic radio bandwidth.

**OUTLINED TECHNICAL PROBLEMS**

- The problem of the first document is common to all legacy MAC protocols and the relevant ATM schedulers, namely, the allocated data block is one ATM cell transmitted in a slot inserted in a flow of cells, virtually continuous, whose timing depends on the characteristics of the physical medium. Most of those schedulers overcome the limitation concerning the scheduling at a fixed period: for instance, if the required rate is obtained by transmitting a cell every 2.5 slots, the transmitting period is continuously switched from 2 to 3 slots, obtaining the required 2.5 rate on the average.

The MAC method of the second cited document does not solve, from the hardware and processing point of view, the problem of scheduling efficiently with granularity at byte a high number of IP packet connections carrying bursts with variable dimension; rather, it is optimized for ATM networks and tends towards becoming as more onerous as increasing the number of connections and decreasing the granularity of the PDU at the parity of QoS requirements. In fact, the management of a high number of connections may require a high processing, as in the worst condition all connections tables must be scanned for assigning the grants in radio frame: so that the table length is limited to 64 entries, corresponding to 64 aggregate connections. Furthermore it is completely silent about a specific scheduling algorithm able to exploit at best both the adaptive PHY mode and service data bursts with variable length. It can be reasonably assumed that a man skilled in the art who attempts to satisfy the Minimum Reserve Rate, on the average, should schedule a variable amount of data at each frame according to the most immediate concept of mathematical average.

Lastly, it is useful investigate the problems arising with MAC for WiMAX in particular for supporting Ethernet traffic. Ethernet data traffic is transmitted by encapsulating it in MAC-PDUs, through fragmentation and packing, whose length is variable and that are mapped to physical bursts, composed of various symbols for OFDM mode or to data regions, composed of slots for OFDMA mode. Even if the standards do not suggest a scheduling policy (like the second cited document), the transmission of constant data blocks is inefficient, due to the mapping to the length of the physical block, whose length is variable and the waste of bandwidth with padding may reduce throughput. Moreover, the length of both traffic data blocks and of the transmitted MAC-PDUs is not easily predictable and scheduled in advance. Input data packets for the downlink service flows are directly received by the Base Station through the Ethernet interface, while the uplink traffic is received by the Terminal Stations and the BS is made aware of it through the bandwidth requests. Bandwidth requests allow the BS to know the size of the data packets queues of every service flow of every TS that is how many bytes of traffic data every uplink service flow has stored in its buffers that are ready to be transmitted, as soon as bandwidth is granted. The policies that allow the Terminal stations to transmit the bandwidth requests are not the main concern of the scheduler, which may assume to receive them through dedicated polling or contention window opportunities without valuable delay. Bandwidth requests, corresponding to the packets received by Terminal stations, are variable length. Therefore, the features of WiMAX physical layer and MAC deeply enforce the transmission of variable data blocks, but the previously mentioned accessing methods do not provide helpful indications for scheduling.

**OBJECTS OF THE INVENTION**

The main object of the present invention is to describe a scheduling method usable in Base Stations of point-to-multipoint radio systems, able to efficiently allocate the bandwidth to a high number of virtual connections both in downlink and uplink directions, taking into consideration Terminal Stations able to operate with adaptive PHY mode, the different QoS requirements of the connections, and service data bursts with variable length.

The scheduling method shall not increase in a valuable way the processing time when the connections number grows up because they are not served by aggregating their rates and the size of their input queues, either received packets, or bandwidth requests.

The scheduling method shall avoid scanning at every radio frame tables whose size is equal to the total number of active service flows, as increasing their number may increase, in the worst case, the processing time too.

The scheduling method shall include a policy for recovering the scheduling delay that may happen because the completely unpredictable transmission of high priority control messages may reduce the bandwidth available in a radio frame.

The scheduling method shall be applied in similar way to downlink and uplink traffic, considering the common features of distributing the radio bandwidth among connections, according to Quality of Service parameters, and considering also the equivalence of received input packets and of bandwidth requests for downlink and uplink service flows.

## SUMMARY AND ADVANTAGES OF THE INVENTION

The invention achieves said object by providing in a telecommunication system a method for scheduling the accesses to a common physical medium from a plurality of terminal stations connected to a base station in adaptive PHY mode for transmitting or receiving variable length data bursts belonging to services with associated priorities, as disclosed in claim 1, while additional advantageous features are described in dependent claims.

The solution adopted in the proposed scheduling method consists in processing at every radio frame only the connections previously planned to be serviced in that frame and in determining for every serviced connection the most suitable frame for next scheduling. During every scheduling procedure, an array of tables is used to store the connections to be serviced at the current and next radio frames up to the most distant frame in the future to be planned (scheduling time horizon). At every radio frame, the connections inserted in the current frame tables are processed, the bandwidth is allocated in variable length blocks, and the frame of next servicing evaluated according to the executed allocation and to the traffic rate parameters. The bandwidth allocation as well as the calculation of the next scheduling frame is performed in base of the scheduling type of every service connection.

Because of these requirements, a very high number of connections shall be efficiently managed: in the described application up to 4096 service flows can be provisioned. The minimum rate is one byte every radio frame, that is 1.600 kbits/sec for 5 ms radio frame duration. Moreover, a lower granularity can easily be obtained as a different implementation can also process fractions of byte at every radio frame.

Four Qualities of Service each one with fixed priority are scheduled: UGS is scheduled with the highest priority QoS, then rtPS, nrtPS and BE. For instance, it shall be possible to adapt the proposed scheduling method to manage different priority levels for every QoS with a low implementation effort. UGS class accounts for pre-allocated traffic with the highest priority, scheduled without request from the TSs, e.g. for management of type E1 flows at 2 Mbits/s trying to recover from frame slips.

Traffic rate shall also be managed in flexible way. In the described application minimum reserved rate is fulfilled for UGS, rtPS and nrtPS service flows, while the maximum sustainable rate is not exceeded for rtPS, nrtPS and BE connections. The rate of rtPS and nrtPS service flows exceeding the minimum reserved up to the maximum sustainable is served with the same priority of the maximum sustainable rate of BE service flows. For instance, the scheduler concept shall include the capacity to serve to traffic rates according to one or more of the following policies, by minor changing in the implementation:

- Minimum reserved rate is defined for BE connections.
- Maximum sustainable rate for rtPS and nrtPs connection is served with the same priority of minimum reserved rate by an algorithm of the "leaky bucket" family, that also takes into consideration the maximum traffic burst that can be accommodated for the service.
- The traffic rate parameters of every connection shall be modified on-the-fly, without stopping and restarting the data flow.
- The overbooking condition for low priority BE connection shall be managed with fairness, by evenly distributing the bandwidth remaining after the minimum rate allocation. Every overbooked BE connection shall receive the same quantity of bandwidth, not depending on, but not exceeding the maximum rate.

The proposed scheduling method is devised for WiMAX point-to-multipoint radio systems, also considering H-FDD Terminal Stations and TDD operational modes, but the same concept can be adopted for every radio systems which include "adaptive PHY mode" and variable size data blocks transfers, in the sense described before. A legitimate wider extension of the scope of the invention also includes: wired, fibreglass, and cable networks.

## BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:

- **fig.1** shows the functional architecture of a downlink scheduler operating according to the method of the invention;
- **fig.2** reports a **TABLE 1** referred to the horizon downlink scheduling in presence of scheduling delay according to the method of the invention;
- **fig.3** shows a shows the functional architecture of an uplink scheduler operating according to the method of the invention.

## DETAILED DESCRIPTION OF AN EMBODIMENT OF THE INVENTION

Before introducing a detailed description of the invention, the following main concepts are summarized with reference to the introductive part limitedly to the only known meaning of used terms (scheduling method and scheduler are used indifferently in the description). The scheduler mainly implements the following features and is compliant with the following requirements:

- The transfer rate of every connection is compliant with minimum reserved rate and maximum sustainable rate.
- The Minimum Reserved Traffic Rate specifies the minimum amount of data to be transported on behalf of the service flow when averaged over time. The BS is able to satisfy bandwidth requests for a service flow up to its Minimum Reserved Traffic Rate. If less bandwidth than its Minimum Reserved Traffic Rate is requested for a service flow, the BS may reallocate the excess reserved bandwidth for other purposes.
- The Maximum Sustainable Traffic Rate defines the peak information rate of the service. This parameter does not limit the instantaneous rate of the service flow, but the rate is policed to conform to this parameter, on the average, over time, even if spare radio bandwidth is available.
- The maximum latency time is not exceeded. This parameter defines the maximum time between the reception of a packet at the network interface and the forwarding of the packet to the radio interface.
- In case of overbooking, fairness between BE is assured.
- The actual implementation manages the BE, nrtPS, rtPS and UGS scheduling types but can be easily adapted to other types and their relative priorities can be changed.

### Downlink scheduler

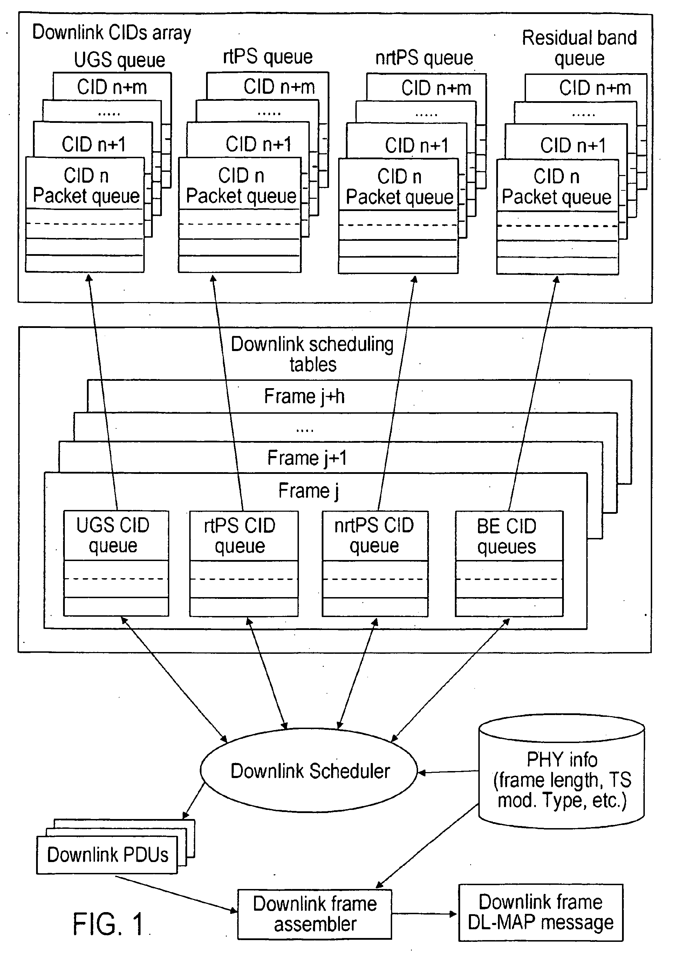

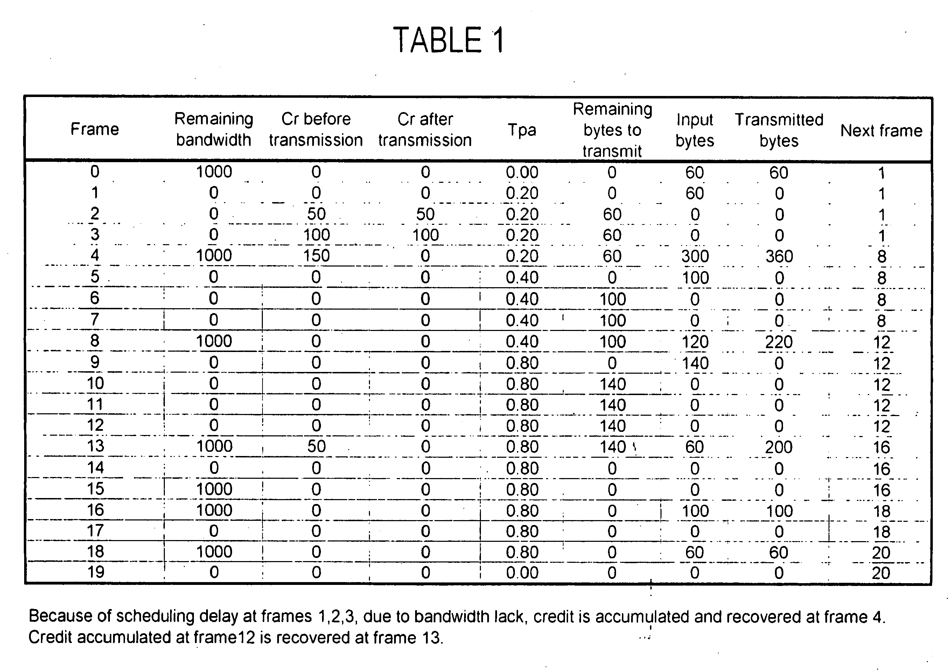

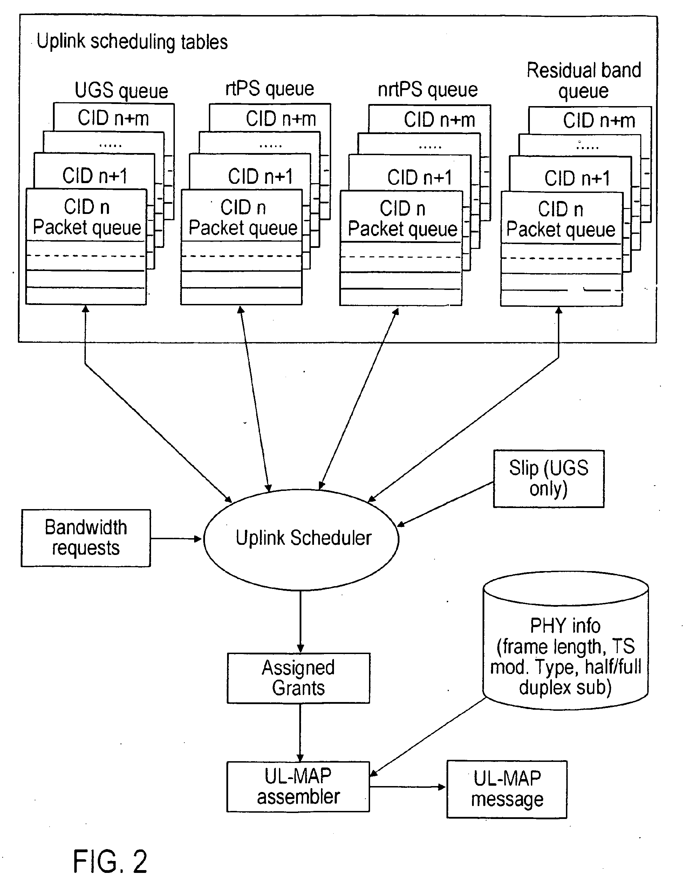

With reference to **figures 1** and **2** the structure of downlink scheduler and the relevant scheduling method are described before; successively, with reference to **fig.3** the uplink scheduler will be described but the same scheduling algorithm is adopted both for downlink and uplink.

With reference to **fig.1**, the Downlink Scheduler receives from the protocol layers all information needed to carry out its job, e.g.: the PHY mode used by the TSs, the frame length and CIDs of the connections which request to be serviced, etc. In its turn the Downlink Scheduler sets up an array of sequential scheduling tables arranged as an array of radio frames used for storing the next scheduling frame of every connection. This array is wide enough to store the most distant scheduled frame in the future time (scheduling time horizon). Every item of the downlink scheduling table contains different lists for every service type, where a connection is inserted to for defining its future scheduling. The lists contained in the scheduling tables are processed in FIFO order and their length and composition are managed dynamically, as a service flow can be inserted at the top and removed from the bottom. In this example the following lists are defined:

- One list for UGS connections.
- One list for processing the Minimum Reserved Rate of rtPS connections.
- One list for processing the Minimum Reserved Rate of nrtPS connections.

- One list for processing the remaining bandwidth that is shared among the Maximum Sustained Rate of rtPS, nrtPS and BE connections. The rtPS and nrtPS service flows are scheduled with a rate equal to the difference between the Maximum Sustained rate and the Minimum Reserved Rate, while the BE service flows are scheduled with the Maximum Sustained rate, in such a way that every service flow is policed to its Maximum Sustainable rate.

- In operation, traffic parameters processing is performed by scheduling in a single block all OFDM symbols of a radio frame. A downlink scheduling block consists in evaluating for all connections how many bytes, coded in one or several MAC-PDUs, are inserted in the radio frame. Bytes allocated to a connection are used for coding packed SDUs or fragments in one or several MAC-PDUs. The same scheduling block also determines the next frame when the serviced connection shall be serviced again for transferring downlink data. The scheduler is activated in advance to the starting of the radio frame. Processing stops when the radio bandwidth is completely allocated or all messages queued to the scheduled connections are serviced. The scheduling tables processing begins with the UGS connections, second rtPS ones, third the nrtPS ones and at the end the Maximum Sustainable Rate of rtPs, nrtPS and BE. Processing is performed according to the following common rule: The service flows lists are processed starting from the top and for every one the total number of transmitted bytes depends on the traffic parameters and the remaining bandwidth. According to the number of transmitted bytes, the next scheduling radio frame is evaluated and the service flow is appended to the bottom of the related list. During the current downlink frame the next frame is completed with the Control information (DL-MAP, UP-MAP, etc.) and all Downlink PDUs assigned to the OFDM block, the frame is assembled and delivered to the transmitter.

**Scheduling algorithm for Minimum Reserved Rate**

- The following parameters are defined:
  - Tf = radio frame period (5 ms).
  - Vr = Minimum Reserved Rate converted to bytes/s.
  - La = average length to be transmitted at every frame for complying with Minimum Reserved Rate. It is calculated by the following formula: (Vr × Tf).
  - Lm = Maximum length of the transmitted data block. According to the scheduling algorithm, this parameter must be lower then (Vr * Latency) for not exceeding the maximum latency time. Moreover, it is not efficient to allocate data blocks longer than the longest PDU. Therefore LM is calculated in this way.
  - Lm = min(2047, (Vr × Latency) × 0.75). 2047 is the is the maximum possible MAC burst permitted in WiMAX. The 0.75 coefficient should allow complying with maximum latency with a suitable tolerance margin.
  - Lp = bytes total number transmitted in current frame. It consists of the payload of the transmitted PDUs (without considering header, sub-headers and CRC).

Moreover the following variable is used:

- Tpa = fractional part of the transmission period (in radio frame units) accumulated from previous scheduling. It is a number always lower than 1.

When the service flow is scheduled at current frame N, the number of bytes to transmit is calculated considering the queued SDUs or SDU's fragments and the available radio frame:

$$Lp = \min(Lm, \text{remaining bandwidth in current frame}, \text{queued bytes}).$$

The next scheduling frame N+ΔN is calculated in this way:

$$NextFrame = CurrentFrame + int\,(Lp/La + Tpa),$$

and the fractional part Tpa is updated at the current frame,

$$Tpa = frac(Lp/La + Tpa),$$

where:

int(x) = integer part of x,

frac(x) = fractional part of x.

Through this algorithm, the obtained average rate is La bytes at every frame, according to the Minimum Reserved Rate to comply with. The proof is provided here below.
After Nt scheduling frames, the transmitted bytes are obtained through the following formula:

$$Nb = \sum_{i=1}^{N} Lp_i$$

The number of scheduling frames Nt is obtained through:

$$Nt = \sum_{i=1}^{N}\left(\mathrm{int}\left(\frac{Lp_i}{La}\right) + frac\left(\frac{Lp_i}{La}\right)\right) = \sum_{i=1}^{N}\frac{Lp_i}{La} = \frac{Nb}{La}$$

Therefore:

$$La = \frac{Nb}{Nt}$$

**Example:**

- Vr = 8 kbytes/sec
- Latency = 50 ms
- Lm = min (2047, 400* 0.75) = 300 bytes
- La = 40 bytes/frame

If the radio bandwidth is available, the service flow is activated to transmit every 300/40 = 7.5 frames.

- When the service flow transmits at frame N, it is scheduled to transmit again at frame N+7 and the fractional part Tpa is set to 0.5.
- Then the service flow transmits at frame 15, due to the carry of accumulated fraction and Tpa = 0.

- Then the service flow transmits at frame N+22 and Tpa = 0.5.

- Then the service flow transmits at frame N+30 and Tpa = 0.0.

**Processing of scheduling delay**

A scheduling delay arises every time a service flow cannot transmit the all scheduled data because of the following causes:

- lack of radio bandwidth,
- lack of input data,
- bandwidth allocation to higher priority connections (management service flows for rtPS),
- half-duplex constraints.

When a scheduled delay arises, it is recovered in the subsequent frames through the following procedure.
The scheduling delay in terms of number of outstanding bytes is accumulated in the Cr variable that is incremented of the average rate La every time the scheduling frame is delayed.
The algorithm memorizes the future scheduled frame in the variable NextFrame and Cr is incremented of the average transfer multiplied to the number of frames delay:

if (NextFrame ≠ CurrentFrame)

$$Cr = Cr + (CurrentFrame - NextFrame) \times La.$$

The number of bytes to transfer is calculated in the same way:

$$Lp = \min(Lm, \text{remaining bandwidth in current frame, queued bytes}).$$

The next scheduling frame is calculated in this way:

if (Lp > Cr)

$$NextFrame = CurrentFrame + int((Lp\text{-}Cr)/La + Tpa)$$

$$Tpa = frac((Lp\text{-}Cr)/La + Tpa)$$

$$Cr = 0$$

else

$$NextFrame = CurrentFrame$$

$$Cr = Cr - Lp$$

If the accumulated delay is not fully recovered, the service flow is appended to the bottom of current frame list and is processed again after servicing the other connections stored in the list. On the contrary, if the accumulated delay is reset, the service flow is appended to the scheduling frame calculated by considering the average rate and the transferred data subtracted of the bytes used for resetting the delay.

If (NextFrame = CurrentFrame)
the service flow is appended to the bottom of current frame,
else
the service flow is appended to the bottom of the frame calculated in the NextFrame variable.

**Example:**

- Vr = 10 Kbytes/sec,
- Lm = 375 bytes,
- La = 50 bytes/frame,
- The service flow receives from the network interface the following packets: packet 1=60 bytes at frame 0, packet 2=60 bytes at frame 1, packet 3=300 bytes at frame 4, packet 4=100 bytes at frame 5, packet 5=120 bytes at frame 8, packet 6=140 bytes at frame 9, packet 7=60 bytes at frame 13, packet 8=100 bytes at frame 16, packet 9=100 bytes at frame 18
- Initial Tpa = 0 - Initial Cr = 0.
- **TABLE 1** in **fig.2** describes how the processing carries on.
- At the end 1000 bytes in 20 frames corresponding to the average rate of 50 bytes/frame

**Scheduling algorithm for Maximum Sustainable Rate**

The Maximum Sustainable Rate is processed through the same algorithm, already described for the Minimum Reserved rate, as the main feature is to suite an average rate, without exceeding it. The bandwidth remaining after Minimum Reserved rate servicing is distributed with the same priority among rtPS, nrtPS and BE service flows that are inserted in the same list. The rtPS and nrtPS connections are scheduled with a rate equal to the difference between the Maximum Sustainable and Minimum Reserved, while the BE service flows are scheduled with the Maximum Reserved Rate. By this way, every service flow is policed to its maximum rate.
Therefore rtPS and nrtPS service flows are scheduled in two steps, by processing two lists, first to suite the Minimum Reserved Rate and then to suite the difference between Maximum and Minimum rate.
The main difference in Maximum Rate Scheduling consists in calculating the number of transmitted bytes, taking into consideration the overbooking condition and not exceeding the maximum latency.

- Tf - radio frame period (5 ms),
- Lcg = maximum number of bytes to transfer every time a service flow is serviced in case of overbooking,
- Br = remaining bandwidth in the current frame,
- Latbe = BE latency,
- nCid = number of service flows appended to the Maximum Sustainable Rate list (BE + rtPS and nrtPS).

The following rule shall apply for not exceeding the maximum latency time:

$$Lcg \times nCid < Br \times (Latbe / Tf).$$

Therefore the Lcg parameter is calculated considering the previous rule and taking a tolerance margin through the 0.5 coefficient.

$$Lcg = Br \times (Latbe / Tf) / nCid \times 0.5.$$

By this way the number of transmitted bytes is obtained:

$$Lp = \min (Lm, Lcg, Br, \text{queued bytes}).$$

The computation of the available bandwidth Br takes into consideration the number of active service flows for every downlink physical profile and its efficiency in bandwidth usage (number of bytes coded for the different modulation types).

**Overbooking processing**

Overbooking requires a special processing for Maximum Sustainable Rate of BE connections:

- As on the average not all connections cannot be serviced in their scheduled frame, the scanning of Maximum Sustainable Rate list is not always completed. The service flows remaining in the list of current frame are inserted at the top of the next frame list and are processed in next frame with higher priority.
- As on the average the same condition will be repeated in next frames, the scheduling list is scanned in round-robin way and every service flow is serviced with a period lower than the maximum latency.
- When a service flow cannot sustain its maximum rate, the delay counter is continuously increased and is shaped to an upper value.

**Uplink Scheduler**

With reference to **fig.3**, the uplink scheduler is derived from downlink scheduler, by only considering the duality of their features. The following comparative Table reports the main input/output characteristics.

**TABLE 2**

| | **Downlink scheduler** | **Uplink scheduler** |
|---|---|---|
| Input | Ethernet packets (SDUs) received from network interface and assigned to service flows by forwarding and classification procedures. The relevant information is the number of bytes to transfer. | Bandwidth requests received from Terminal Stations for every service flows. The relevant information is the number of bytes (grants) to be allocated. |
| Output | Downlink radio frame composed of several bursts containing concatenated MAC-PDUs. | Uplink radio frame definition in the UL-MAP message obtained by assigning the scheduled grants to Terminal Stations. |
| Traffic parameters | The proprietary high level Specification defines the same scheduling types with the same relative priority levels (BE, nrtPS, rtPS, UGS) and the same traffic rates (Minimum Reserved and Maximum Sustainable) for both downlink and uplink service flows. | |

Differences between uplink and downlink scheduling:

- The bandwidth remaining for traffic service flows is not affected by broadcast management messages (DL-MAP, UL-MAP, etc.) while a part of the frame is allocated to contention windows.
- The bandwidth allocation is performed without knowing at scheduling time the MAC protocol overhead (header, sub-headers and CRC). Therefore such overhead must be taken into consideration by the requests transmitted by Terminal Stations.

- The constant rate of an UGS connection may be changed because of slip requests.

Scheduling communalities are more relevant than differences, in such a way that it is possible to adopt the same concepts. On the other hand the uplink scheduling algorithm is easier to implement because it is less tricky to allocate grants that are always rounded up to OFDM symbols boundaries than to generate MAC-PDUs that must exactly fit in the available burst length. Moreover the uplink scheduler implementation is easier because the data structures are simpler as the queues of input SDUs are replaced by only an accumulator of bandwidth requests.

**Scheduling algorithm**

The scheduling algorithms are based on the same concept already described for downlink traffic flow, considering the duality of bandwidth requests and input SDUs.

- Ap - estimate of the input queue length of a Terminal Station. It is updated at the reception of every bandwidth request by adding the value of incremental requests or by setting the new value in case of aggregate requests.

At the reception of an uplink PDU the TS queue estimate is decremented of the number of bytes actually used. Besides the queue estimate is reset when a burst completely filled in by padding is received, as a burst not used for traffic nor for management data is interpreted as an aggregate request set to 0.
The scheduling algorithm is the same already described for the downlink flow and the allocated grant is determined in this way:

$$Lp = \min(Lm, \text{remaining bandwidth in current frame}, Ap).$$

The same principles are again applied for managing the scheduling delay and the BE overbooking.
Although the invention has been described with particular reference to a preferred embodiment, it will be evident to those skilled in the art, that the present invention is not limited thereto, but further variations and modifications may be applied without departing from the scope of the claims.

**USED ACRONYMS**

| | |
|---|---|
| 3GPP - | 3rd Generation Partnership Program |
| ATM | Asynchronous Transfer Mode |
| BE | Best Effort |
| BPSK | Binary Phase-Shift Keying |
| BS | Base Station |
| CBR | Constant Bit Rate |
| CID | Connection Identifier |
| DLC | Data Link Control layer |
| ETSI | European Telecommunications Standards Institute |
| FDD | Frequency Division Duplexing |
| FEC | Forwarding Error Check |
| IEEE | Institute of Electrical and Electronics Engineers |
| MAC | Medium Access Control |
| MRR | Minimum Reserved Rate |
| MSR | Maximum Sustainable Rate |
| nrtPS | non-real-time Polling Service |
| OFDM | Orthogonal Frequency Division Multiplexing |
| OFDMA | Orthogonal Frequency Division Multiple Access |
| PDU | Protocol Data Unit |
| PHY | Physical Layer |
| PMP | Point-to-Multipoint |
| PUSC | Partial Usage Sub-Channel |
| QAM | Quadrature Amplitude Modulation |

| | |
|---|---|
| QoS | Quality of Service |
| QPSK | Quadrature Phase Shift Keying |
| RLC | Radio Link Control |
| rtPS | real-time Polling Service |
| SDU | Service Data Unit |
| SS | Subscriber Station |
| TDD | Time Division Duplexing |
| TS | Terminal Station |
| TS | Technical Specification |
| UGS | Unsolicited Grant Service |
| WiMAX | Worldwide Interoperability for Microwave Access |

## Claims

**1.** Method for scheduling, in a telecommunications system, the accesses to the physical medium shared between a plurality of terminal stations connected to a base station in adaptive PHY mode for transmitting or receiving on each respective connection variable length data bursts of a service flow to be allocated inside temporal frames of fixed lengths, wherein said data bursts are buffered by the originators for each connection, and the relevant connection identifiers are stored at the base station into service queues with associated priorities of service, including the repeatedly executed step of:

- scanning at every radio frame the connection identifiers stored into at least a queue marked with the highest priority and servicing only the relevant connections planned to be serviced in the current frame,

**characterized in that** includes the further step of:

- calculating at the current frame the next transmission frame for each serviced connection according to the following rule:

$$\text{NextFrame} = \text{CurrentFrame} + \text{integer}(Lp/La + Tpa),$$

where:

• CurrentFrame is the frame number N of the current frame,
• NextFrame is the frame number N+AN of the next frame scheduled for transmitting,
• Lp is the total number bytes transmitted in current frame,
• La is the average number of bytes that should be transmitted at every frame for complying with Minimum Reserved Rate, and
• Tpa is the fractional part of the frame accumulated from previous scheduling steps.

**2.** The method of claim 1, **characterized in that** Tpa is updated at the current frame as:

$$Tpa = \text{fractional}(Lp/La + Tpa).$$

**3.** The method of claim 1 or 2, **characterized in that** the number of bytes to transmit in current frame is calculated according to the following rule:
Lp = min(Lm, remaining bandwidth in current frame, queued bytes),
where:

• min(...) is the minimum between the three arguments,
• Lm is the maximum length of the transmitted data burst.

**4.** The method of claim 3, **characterized in that** Lm is calculated according to the following rule:

$$Lm = \min(MaxBurst, (Vr \times Latency) \times K)$$

where:

- MaxBurst is the maximum possible burst permitted in the system,
- Vr is Minimum Reserved Rate converted to bytes/s,
- Latency defines the maximum time between the reception of a packet at the system interface and the forwarding of the packet to the radio interface,
- K is a coefficient lower than one which allows to comply with maximum latency with a suitable tolerance margin.

**5.** The method of claim 4, **characterized in that** K = 0.75.

**6.** The method of any claim 1 to 5, **characterized in that** in case of scheduling delay arising every time a service flow cannot transmit its scheduled data or connection identifiers are not queued for the current frame, the scheduling delay in terms of number of outstanding bytes is accumulated into a variable Cr that is incremented according to the following rule:

$$Cr = Cr + (CurrentFrame - NextFrame) \times La$$

valid if (NextFrame ≠ CurrentFrame).

**7.** The method of claim 6, **characterized in that** the next scheduling frame is calculated in this way:

```
if (Lp > Cr)
     NextFrame = CurrentFrame + int ((Lp-Cr)/La + Tpa)
     Tpa = frac((Lp-Cr)/La + Tpa)
     Cr = 0
else
     NextFrame = CurrentFrame
     Cr = Cr - Lp
```

**8.** The method of any claim 1 to 7, **characterized in that** said priority queues are filled-up and emptied-out in FIFO order, in such a way that a connection identifier is inserted at the top and removed from the bottom.

**9.** The method of claim 8, **characterized in that** said priority queues are clusterized by sequential frame order they belong to and the number of stored cluster tables spanning a predefined time horizon is wide enough to store the most distant scheduled frame in the future time.

**10.** The method of claim 9, **characterized in that**:

- if the accumulated delay Cr is not fully recovered, the connection identifier of the service flow the Cr is referred to is reintroduced into the queue of current frame and is processed again after servicing the other connection identifiers stored into said queue;
- else, the connection identifier is introduced into the queue of the frame calculated in the NextFrame variable.

**11.** The method of claim 10, **characterized in that**:

- If (NextFrame = CurrentFrame) the connection identifier of the service flow is reintroduced into the queue of current frame;
- else, the connection identifier is introduced into the queue of the frame calculated in the NextFrame variable.

**12.** The method of any claim 1 to 11, **characterized in that** said priority queues include a queue of connection identifiers of UGS scheduled for Minimum Reserved Rate with the highest priority of service.

**13.** The method of claim 12, **characterized in that** said priority queues include a queue of connection identifiers of rtPS scheduled for Minimum Reserved Rate immediately after said UGS queue.

**14.** The method of claim 13, **characterized in that** said priority queues include a queue of connection identifiers of nrtPS scheduled for Minimum Reserved Rate immediately after said rtPS queue.

**15.** The method of claim 14, **characterized in that** said priority queues includes a queue of connection identifiers for rtPS, nrtPS, and Best Effort packet services sharing the remaining bandwidth with the same priority scheduled for Maximum Sustained Rate immediately after said nrtPS queue.

**16.** The method of claim 15, **characterized in that** the number Lp of bytes transmitted in the current frame for Maximum Sustained Rate is obtained with the following rule:

$$Lp = \min (Lm, Lcg, Br, \text{queued bytes}),$$

where:

- Lm is the maximum length of the transmitted data burst,
- Lcg is the maximum number of bytes to transfer every time a service flow is serviced in case of overbooking,
- Br is the remaining bandwidth in the current frame,

**17.** The method of claim 16, **characterized in that** the number of bytes Lcq is calculated as in the following:

$$Lcg = Br \times (Latbe / Tf) / nCid \times 0.5,$$

where:

- Tf is the radio frame period,
- Latbe is the latency of the Best Effort service flows,
- nCid is the number of connection identifiers inside the Maximum Sustainable Rate queue.

**18.** The method of claim 17, **characterized in that** in case of overbooking:

- the connection identifiers remaining in a priority queue of current frame are introduced in the corresponding queue of the next frame where are processed with higher priority;
- the scheduling queue is scanned in round-robin way and every service flow is serviced with a period lower than the maximum latency;
- the delay counter Cr is shaped to an upper value.

**19.** The method of any claim 1 to 18, **characterized in that** in case said shared medium is for transmitting in uplink from a Terminal Station to the Base Station, the number Lp of bytes to transmit in current frame is calculated with the following rule:

$$Lp = \min (Lm, \text{remaining bandwidth in current frame}, Ap),$$

where,

- Ap is an estimate at the Base Station of the length of the input queue at the Terminal Station, which estimate is updated at the reception of every bandwidth request by adding the value of incremental requests or by setting the new value in case of aggregate requests, and decremented of the number of bytes actually used at the reception of an uplink PDU.

## Patentansprüche

1. Verfahren in einem Telekommunikationssystem zur Ablaufplanung der Zugriffe auf ein physisches Medium, das gemeinsam von mehreren mit einer Basisstation im adaptiven PHY-Modus verbundenen Endgerätestationen benutzt wird, um auf jeder jeweiligen Verbindung Datenbursts variabler Länge eines Dienstflusses, die innerhalb von zeitlichen Rahmen fester Länge zuzuteilen sind, zu senden und zu empfangen, wobei die Datenbursts durch die Quellstationen für jede Verbindung gepuffert werden und die relevanten Verbindungskennungen in der Basisstation in Dienstwarteschlangen mit zugeordneten Dienstprioritäten gespeichert werden, mit dem folgenden wiederholt ausgeführten Schritt:

   - in jedem Funkrahmen Scannen der in mindestens einer mit der höchsten Priorität markierten Warteschlange gespeicherten Verbindungskennungen und Versorgen nur der relevanten Verbindungen, die für eine Versorgung in dem aktuellen Rahmen geplant sind,

   **gekennzeichnet durch** den folgenden weiteren Schritt:

   - in dem aktuellen Rahmen Berechnen des nächsten Übertragungsrahmens für jede versorgte Verbindung gemäß der folgenden Regel:

   $$\text{NextFrame} = \text{CurrentFrame} + \text{integer}(Lp/La + Tpa),$$

   wobei

   * CurrentFrame die Rahmennummer N des aktuellen Rahmens ist,
   * NextFrame die Rahmennummer N+ΔN des nächsten für Übertragung eingeplanten Rahmens ist,
   * Lp die Gesamtzahl in dem aktuellen Rahmen gesendeter Byte ist,
   * La die mittlere Anzahl von Byte ist, die in jedem Rahmen gesendet werden sollte, um die minimale reservierte Rate einzuhalten, und
   * Tpa der gebrochene Teil des Rahmens ist, der aus vorherigen Ablaufplanungsschritten akkumuliert wird.

2. Verfahren nach Anspruch 1, **dadurch gekennzeichnet, dass** Tpa bei dem aktuellen Rahmen folgendermaßen aktualisiert wird:

   $$\text{Tpa} = \text{fractional}(Lp/La + Tpa).$$

3. Verfahren nach Anspruch 1 oder 2, **dadurch gekennzeichnet, dass** die Anzahl der in dem aktuellen Rahmen zu sendenden Byte gemäß der folgenden Regel berechnet wird: Lp = min(Lm, übrige Bandbreite im aktuellen Rahmen, in Wartenschlangen eingereihte Byte), wobei

   * min(...) das Minimum zwischen den drei Argumenten ist,
   * Lm die maximale Länge des gesendeten Datenbursts ist.

4. Verfahren nach Anspruch 3, **dadurch gekennzeichnet, dass** Lm gemäß der folgenden Regel berechnet wird:

   $$Lm = \min(\text{MaxBurst}, (Vr \times \text{Latenz}) \times K)$$

   wobei

   * MaxBurst der maximal mögliche in dem System zugelassene Burst ist,
   * Vr die in Byte/s umgewandelte minimale reservierte Rate ist,
   * Latenz die maximale Zeit zwischen dem Empfang eines Pakets an der Systemschnittstelle und dem Weiterleiten des - Pakets zu der Funkschnittstelle definiert,

* K ein Koeffizient kleiner als eins ist, der es erlaubt, die maximale Latenz mit einer geeigneten Toleranzreserve einzuhalten.

**5.** Verfahren nach Anspruch 4, **dadurch gekennzeichnet, dass** K = 0,75 ist.

**6.** Verfahren nach einem der Ansprüche 1 bis 5, **dadurch gekennzeichnet, dass** im Fall von Ablaufplanungsverzögerung, die jedesmal entsteht, wenn für den aktuellen Rahmen ein Dienstfluss seine eingeplanten Daten nicht senden kann oder Verbindungskennungen nicht in Wartenschlangen eingereiht werden, die Ablaufplanungsverzögerung als Anzahl ausstehender Byte in einer Variablen Cr akkumuliert wird, die gemäß der folgenden Regel inkrementiert wird:

$$Cr = Cr + (CurrentFrame - NextFrame) \times La,$$

gültig im Fall (NextFrame ≠ CurrentFrame).

**7.** Verfahren nach Anspruch 6, **dadurch gekennzeichnet, dass** der nächste Ablaufplanungsrahrnen auf die folgende Weise berechnet wird:

```
im Fall (Lp > Cr)
 NextFrame = CurrentFrame + int ((Lp-Cr)/La + Tpa)
 Tpa = frac ((Lp-Cr) / La + Tpa)
 Cr = 0
andernfalls
 NextFrame = CurrentFrame
 Cr = Cr - Lp.
```

**8.** Verfahren nach einem der Ansprüche 1 bis 7, **dadurch gekennzeichnet, dass** die Prioritätswarteschlangen in FIFO-Reihenfolge aufgefüllt und ausgeleert werden, dergestalt, dass eine Verbindungskennung an der obersten Position eingefügt und von der untersten Position entfernt wird.

**9.** Verfahren nach Anspruch 8, **dadurch gekennzeichnet, dass** die Prioritätswarteschlangen nach sequenzieller Rahmenreihenfolge, wozu sie gehören, geclustert werden und die Anzahl gespeicherter Clustertabellen, die einen vordefinierten Zeithorizont überspannen, breit genug ist, um den fernsten eingeplanten Rahmen in der zukünftigen Zeit zu speichern.

**10.** Verfahren nach Anspruch 9, **dadurch gekennzeichnet, dass**

* falls die akkumulierte Verzögerung Cr nicht voll wiedergutgemacht wird, die Verbindungskennung des Dienstflusses, auf den die Cr bezogen, wird, in die Warteschlange des aktuellen Rahmens wiedereingeführt und nochmals verarbeitet wird, nachdem die anderen in der Warteschlange gespeicherten Verbindungskennungen versorgt wurden;
* andernfalls die Verbindungskennung in die Warteschlange des in der NextFrame-Variablen berechneten Rahmens eingefürt wird.

**11.** Verfahren nach Anspruch 10, **dadurch gekennzeichnet, dass**

* im Fall (NextFrame = CurrentFrame) die Verbindungskennung des Dienstflusses in die Warteschlange des aktuellen Rahmens wiedereingeführt wird;
* andernfalls die Verbindungskennung in die Warteschlange des in der NextFrame-Variablen berechneten Rahmens eingefürt wird.

**12.** Verfahren nach einem der Ansprüche 1 bis 11, **dadurch gekennzeichnet, dass** die Prioritätswarteschlangen eine Warteschlange von Verbindungskennungen von UGS enthalten, der für minimale reservierte Rate mit der höchsten Dienstpriorität eingeplant ist.

**13.** Verfahren nach Anspruch 12, **dadurch gekennzeichnet, dass** die Prioritätswarteschlangen eine Warteschlange von Verbindungskennungen von rtPS enthalten, der für minimale reservierte Rate unmittelbar nach der UGS-Warteschlange eingeplant ist.

**14.** Verfahren nach Anspruch 13, **dadurch gekennzeichnet, dass** die Prioritätswarteschlangen eine Warteschlange von Verbindungskennungen von nrtPS enthalten, der für minimale reservierte Rate unmittelbar nach der rtPS-Warteschlange eingeplant ist.

**15.** Verfahren nach Anspruch 14, **dadurch gekennzeichnet, dass** die Prioritätswarteschlangen eine Warteschlange von Verbindungskennungen für rtPS-, nrtPS- und Best-Effort-Paketdienste enthalten, die sich die übrige Bandbreite mit derselben Priorität teilen, die für maximale aufrechterhaltene Rate unmittelbar nach der nrtPS-Warteschlange eingeplant sind.

**16.** Verfahren nach Anspruch 15, **dadurch gekennzeichnet, dass** die Anzahl Lp der in dem aktuellen Rahmen für maximale aufrechterhaltene Rate gesendeten Byte mit der folgenden Regel erhalten wird:
Lp = min (Lm, Lcg, Br, in Warteschlangen eingereihte Byte),
wobei

* Lm die maximale Länge des gesendeten Datenbursts ist,
* Lcg die maximale Anzahl von Byte ist, die jedesmal, wenn ein Dienstfluss im Fall von Überbuchung versorgt wird, zu transferieren ist,
* Br die übrige Bandbreite in dem aktuellen Rahmen ist.

**17.** Verfahren nach Anspruch 16, **dadurch gekennzeichnet, dass** die Anzahl von Byte Lcg wie im Folgenden berechnet wird:

$$Lcg = Br \times (Latbe / Tf) / nCid \times 0{,}5,$$

wobei

* Tf die Funkrahmenperiode ist,
* Latbe die Latenz der Best-Effort-Dienstflüsse ist,
* nCid die Anzahl der Verbindungskennungen innerhalb der Warteschlange für maximale aufrechterhaltbare Rate ist.

**18.** Verfahren nach Anspruch 17, **dadurch gekennzeichnet, dass** im Fall von Überbuchung

* die in einer Prioritätswarteschlange des aktuellen Rahmens verbleibenden Verbindungskennungen in die entsprechende Warteschlange des nächsten Rahmens eingeführt und dort mit höherer Priorität verarbeitet werden;
* die Ablaufplanungswarteschlange im Reigenverfahren gescannt wird und jeder Dienstfluss mit einer Periode versorgt wird, die kleiner als die maximale Latenz ist;
* der Verzögerungszähler Cr auf einen oberen Wert geformt wird.

**19.** Verfahren nach einem der Ansprüche 1 bis 18, **dadurch gekennzeichnet, dass** falls das gemeinsam benutzte Medium zum Senden in der Aufwärtsstrecke von einer Endgerätestation zu der Basisstation dient, die Anzahl Lp der in dem aktuellen Rahmen zu sendenden Byte mit der folgenden Regel berechnet wird:
Lp = min (Lm, verbleibende Bandbreite im aktuellen Rahmen, Ap)
wobei

* Ap eine Schätzung in der Basisstation der Länge der Eingangswarteschlange in der Endgerätestation ist, wobei diese Schätzung beim Empfang jeder Bandbreitenanforderung durch Addieren des Werts inkrementeller Anforderungen oder durch Setzen des neuen Werts im Fall von aggregierten Anforderungen aktualisiert und beim Empfang einer Aufwärtsstrecken-PDU per Anzahl der tatsächlich verwendeten Byte dekrementiert wird.

## Revendications

1. Procédé d'ordonnancement, dans un système de télécommunications, des accès au support physique partagé entre une pluralité de stations terminales connectées à une station de base en mode PHY adaptatif pour émettre ou recevoir sur chaque connexion respective des rafales de données de longueur variable d'un flux de services qui sont à allouer à l'intérieur de trames temporelles de longueurs fixes, dans lequel lesdites rafales de données sont mises en mémoire tampon par les expéditeurs pour chaque connexion et les identifiants de connexion pertinents sont stockés, au niveau de la station de base, dans des files d'attente de service auxquelles sont associées des priorités de service, incluant l'étape exécutée de façon répétitive de :

    - balayage, à chaque trame radio, des identifiants de connexion stockés dans au moins une file d'attente marquée par la priorité la plus élevée et service des seules connexions pertinentes dont le service est planifié dans la trame courante,

    **caractérisé en ce qu'**il inclut l'étape supplémentaire de :

    - calcul, au niveau de la trame courante, de la trame d'émission suivante pour chaque connexion servie selon la règle suivante :

$$\text{TrameSuivante} = \text{TrameCourante} + \text{entier}(Lp/La + Tpa),$$

    où :

    • TrameCourante est le numéro de trame N de la trame courante,
    • TrameSuivante est le numéro de trame N+ΔN de la trame suivante ordonnancée en vue de l'émission,
    • Lp est le nombre total d'octets émis dans la trame courante,
    • La est le nombre moyen d'octets qu'il convient d'émettre à chaque trame pour se conformer au Débit Réservé Minimum et
    • Tpa est la fraction de la trame accumulée depuis des étapes d'ordonnancement antérieures.

2. Procédé selon la revendication 1, **caractérisé en ce que** Tpa est mis à jour au niveau de la trame courante en tant que :

$$\text{Tpa} = \text{fraction}(Lp/La + Tpa).$$

3. Procédé selon la revendication 1 ou 2, **caractérisé en ce que** le nombre d'octets à émettre dans une trame courante est calculé selon la règle suivante :
    Lp = min (Lm, largeur de bande restante dans la trame courante, octets en file d'attente),
    où :

    • min (...) est le minimum entre les trois arguments,
    • Lm est la longueur maximum de la rafale de données émise.

4. Procédé selon la revendication 3, **caractérisé en ce que** Lm est calculé selon la règle suivante :

$$\text{Lm} = \min(\text{MaxRafale}, (\text{Vr} \times \text{Latence}) \times K),$$

    où :

    • MaxRafale est la rafale maximum possible autorisée dans le système,
    • Vr est un Débit Réservé Minimum converti en octets/s,
    • Latence définit le temps maximum entre la réception d'un paquet au niveau de l'interface du système et la transmission du paquet vers l'interface radio,
• K est un coefficient inférieur à un coefficient permettant de satisfaire une latence maximum avec une marge de tolérance adaptée.

**5.** Procédé selon la revendication 4, **caractérisé en ce que** K = 0,75.

**6.** Procédé selon l'une des revendications 1 à 5, **caractérisé en ce que**, dans le cas d'un retard d'ordonnancement survenant à chaque fois qu'un flux de services ne peut pas transmettre ses données ordonnancées ou que des identifiants de connexion ne sont pas mis en file d'attente pour la trame courante, le retard d'ordonnancement en termes de nombre d'octets non transmis est accumulé dans une variable Cr qui est incrémentée selon la règle suivante :

$$Cr = Cr + (TrameCourante - TrameSuivante) \times La$$

est valide si (TrameSuivante ≠ TrameCourante).

**7.** Procédé selon la revendication 6, **caractérisé en ce que** la trame d'ordonnancement suivante est calculée de cette manière :

```
si (Lp > Cr)
   TrameSuivante = TrameCourante + int ( (Lp-Cr) / La + Tpa)
   Tpa = frac ( (Lp-Cr) / La + Tpa)
   Cr = 0
sinon
   TrameSuivante = TrameCourante
   Cr = Cr - Lp
```

**8.** Procédé selon l'une des revendications 1 à 7, **caractérisé en ce que** lesdites files d'attente prioritaires sont remplies et vidées selon un ordre FIFO, de manière à ce qu'un identifiant de connexion soit inséré au sommet et retiré par le bas.

**9.** Procédé selon la revendication 8, **caractérisé en ce que** lesdites files d'attente prioritaires sont groupées d'après l'ordre de trame séquentiel auquel elles appartiennent et le nombre de tables en cluster stockées couvrant un horizon de temps prédéfini est suffisamment grand pour stocker la trame ordonnancée la plus éloignée dans le futur.

**10.** Procédé selon la revendication 9, **caractérisé en ce que** :

• si le retard accumulé Cr n'est pas totalement récupéré, l'identifiant de connexion du flux de services auquel se réfère le Cr est réintroduit dans la file d'attente de la trame courante et est traité à nouveau après le service des autres identifiants de connexion stockés dans ladite file d'attente ;
• sinon, l'identifiant de connexion est introduit dans la file d'attente de la trame calculée dans la variable TrameSuivante.

**11.** Procédé selon la revendication 10, **caractérisé en ce que** :

• si (TrameSuivante = TrameCourante), l'identifiant de connexion du flux de services est réintroduit dans la file d'attente de la trame courante ;
• sinon, l'identifiant de connexion est introduit dans la file d'attente de la trame calculée dans la variable TrameSuivante.

**12.** Procédé selon l'une des revendications 1 à 11, **caractérisé en ce que** lesdites files d'attente prioritaires incluent une file d'attente d'identifiants de connexion de UGS planifiée pour un Débit Réservé Minimum avec la priorité de service la plus élevée.

**13.** Procédé selon la revendication 12, **caractérisé en ce que** lesdites files d'attente prioritaires incluent une file d'attente d'identifiants de connexion de rtPS planifiée pour un Débit Réservé Minimum immédiatement après ladite file d'attente UGS.

**14.** Procédé selon la revendication 13, **caractérisé en ce que** lesdites files d'attente prioritaires incluent une file d'attente d'identifiants de connexion de nrtPS planifiée pour un Débit Réservé Minimum immédiatement après ladite file d'attente rtPS.

**15.** Procédé selon la revendication 14, **caractérisé en ce que** lesdites files d'attente prioritaires incluent une file d'attente d'identifiants de connexion pour des services paquets rtPS, nrtPS et Best Effort partageant la largeur de bande restante avec la même priorité que celle qui est planifiée pour un Débit Soutenu Maximum immédiatement après ladite file d'attente nrtPS.

**16.** Procédé selon la revendication 15, **caractérisé en ce que** le nombre Lp d'octets émis dans la trame courante pour un Débit Soutenu Maximum est obtenu avec la règle suivante :
Lp = min (Lm, Lcg, Br, octets en file d'attente),
où :

- Lm est la longueur maximum de la rafale de données émise,
- Lcg est le nombre maximum d'octets à transférer à chaque fois qu'un flux de services est servi en cas de surréservation,
- Br est la largeur de bande restante dans la trame courante.

**17.** Procédé selon la revendication 16, **caractérisé en ce que** le nombre d'octets Lcq est calculé de la manière suivante :

$$Lcg = Br \times (Latbe/Tf) / nCid \times 0,5,$$

où :

- Tf est la période de la trame radio,
- Latbe est la latence des flux de services Best Effort,
- nCid est le nombre d'identifiants de connexion à l'intérieur de la file d'attente à Débit Soutenu Maximum.

**18.** Procédé selon la revendication 17, **caractérisé en ce que**, en cas de surréservation :

- les identifiants de connexion demeurant dans une file d'attente prioritaire d'une trame courante sont introduits dans la file d'attente correspondante de la trame suivante où ils sont traités avec une priorité plus élevée ;
- la file d'attente d'ordonnancement est balayée en mode "tourniquet" et chaque flux de services est servi avec une période inférieure à la latence maximum ;
- une valeur supérieure est fixée pour le compteur de retard Cr.

**19.** Procédé selon l'une des revendications 1 à 18, **caractérisé en ce que**, dans le cas où ledit support partagé est destiné à une transmission en liaison montante d'une Station Terminale vers la Station de Base, le nombre Lp d'octets à transmettre dans la trame courante est calculé avec la règle suivante :
Lp = min (Lm, largeur de bande restante dans la trame courante, Ap),
où :

- Ap est une estimation, au niveau de la Station de Base, de la longueur de la file d'attente d'entrée au niveau de la Station Terminale, laquelle estimation est mise à jour à la réception de chaque demande de bande passante par addition de la valeur des requêtes incrémentales ou par fixation de la nouvelle valeur en cas de requêtes collectives et décrémentée du nombre d'octets effectivement utilisés à la réception d'une PDU en liaison montante.

Downlink CIDs array
UGS queue
rtPS queue
nrtPS queue
Residual band queue
CID n+m
.....
CID n+1
CID n
Packet queue
Downlink scheduling tables
Frame j+h
....
Frame j+1
Frame j
UGS CID queue
rtPS CID queue
nrtPS CID queue
BE CID queues
Downlink Scheduler
PHY info (frame length, TS mod. Type, etc.)
Downlink PDUs
Downlink frame assembler
Downlink frame DL-MAP message


FIG. 1

# TABLE 1

| Frame | Remaining bandwidth | Cr before transmission | Cr after transmission | Tpa | Remaining bytes to transmit | Input bytes | Transmitted bytes | Next frame |
|---|---|---|---|---|---|---|---|---|
| 0 | 1000 | 0 | 0 | 0.00 | 0 | 60 | 60 | 1 |
| 1 | 0 | 0 | 0 | 0.20 | 0 | 60 | 0 | 1 |
| 2 | 0 | 50 | 50 | 0.20 | 60 | 0 | 0 | 1 |
| 3 | 0 | 100 | 100 | 0.20 | 60 | 0 | 0 | 1 |
| 4 | 1000 | 150 | 0 | 0.20 | 60 | 300 | 360 | 8 |
| 5 | 0 | 0 | 0 | 0.40 | 0 | 100 | 0 | 8 |
| 6 | 0 | 0 | 0 | 0.40 | 100 | 0 | 0 | 8 |
| 7 | 0 | 0 | 0 | 0.40 | 100 | 0 | 0 | 8 |
| 8 | 1000 | 0 | 0 | 0.40 | 100 | 120 | 220 | 12 |
| 9 | 0 | 0 | 0 | 0.80 | 0 | 140 | 0 | 12 |
| 10 | 0 | 0 | 0 | 0.80 | 140 | 0 | 0 | 12 |
| 11 | 0 | 0 | 0 | 0.80 | 140 | 0 | 0 | 12 |
| 12 | 0 | 0 | 0 | 0.80 | 140 | 0 | 0 | 12 |
| 13 | 1000 | 50 | 0 | 0.80 | 140 | 60 | 200 | 16 |
| 14 | 0 | 0 | 0 | 0.80 | 0 | 0 | 0 | 16 |
| 15 | 1000 | 0 | 0 | 0.80 | 0 | 0 | 0 | 16 |
| 16 | 1000 | 0 | 0 | 0.80 | 0 | 100 | 100 | 18 |
| 17 | 0 | 0 | 0 | 0.80 | 0 | 0 | 0 | 18 |
| 18 | 1000 | 0 | 0 | 0.80 | 0 | 60 | 60 | 20 |
| 19 | 0 | 0 | 0 | 0.00 | 0 | 0 | 0 | 20 |

Because of scheduling delay at frames 1,2,3, due to bandwidth lack, credit is accumulated and recovered at frame 4. Credit accumulated at frame12 is recovered at frame 13.

Uplink scheduling tables
UGS queue
rtPS queue
nrtPS queue
Residual band queue
CID n+m
.....
CID n+1
CID n
Packet queue
Slip (UGS only)
Bandwidth requests
Uplink Scheduler
PHY info (frame length, TS mod. Type, half/full duplex sub)
Assigned Grants
UL-MAP assembler
UL-MAP message

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1324552 A
- EP 1017244 A1
- EP 1501326 B1